# EUROPÄISCHE PATENTANMELDUNG

(11) **EP 2 341 267 A1**
(43) Veröffentlichungstag der Anmeldung: **06.07.2011**
(21) Anmeldenummer: 09015669.6
(22) Anmeldetag: 18.12.2009
(51) Int. Cl.: F16J 13/24, F16L 55/07, F16L 55/115

(54) **Leitungsverschluss**

(71) Anmelder: Grundfos Management A/S, 8850 Bjerringbro (DK)
(72) Erfinder: Madsen, Steffen, 8950 Ørsted (DK); Dalsgaard, Anders, 8800 Viborg (DK); Petersen, Bent Holm, 8450 Hammel (DK); Jensen, Jens Christian, 8850 Bjerringbro (DK)
(74) Vertreter: Vollmann, Heiko

(57) **Zusammenfassung**

Ein zum Verschließen einer Fluidleitung dienender Leitungsverschluss weist einen Verschlusskörper (4) auf, der an einem Leitungsende befestigbar ist. Darüber hinaus ist ein Sicherungskörper (30) vorgesehen, der eine in das Leitungsinnere führende Öffnung (28) an dem Verschlusskörper (4) oder in der Leitung (2) verschließt. Der Sicherungskörper (30) ist derart ausgebildet und in Bezug auf den Verschlusskörper (4) angeordnet, dass er die Öffnung (28) freigibt bevor der Verschlusskörper (4) von der Leitung (2) entfernt werden kann. (Fig. 1)

## Beschreibung

### Beschreibung

Die Erfindung betrifft einen Leitungsverschluss mit den in dem Oberbegriff des Anspruchs 1 angegebenen Merkmalen.

Es ist bekannt, Rohr- bzw. Schlauchleitungen mit einem in ein Rohr- bzw. Schlauchleitungsende eingeführten und dort festgelegten Verschlusskörper zu verschließen. Solche Verschlüsse von Leitungen sind vergleichsweise einfach aufgebaut und dementsprechend kostengünstig, allerdings bergen sie die Gefahr, dass beim Entfernen des Verschlusskörpers von einer noch mit einem Fluiddruck beaufschlagten Leitung dieser sich geschossartig löst. So kann beispielsweise ein in eine Leitung eingeführter Verschlusskörper beim Lösen dessen Befestigung von dem in der Leitung herrschenden Fluiddruck mit hoher Geschwindigkeit aus der Druckleitung gedrückt werden und gegebenenfalls die Person, die die Befestigung des Verschlusskörpers gelöst hat, verletzen.

Vor diesem Hintergrund liegt der Erfindung die Aufgabe zugrunde, einen Leitungsverschluss zu schaffen, der einerseits einfach aufgebaut ist und andererseits sicher von einer Leitung entfernt werden kann.

Gelöst wir diese Aufgabe durch einen Leitungsverschluss mit den in Anspruch 1 angegebenen Merkmalen. Vorteilhafte Weiterbildungen dieses Leitungsverschlusses ergeben sich aus den Unteransprüchen, der nachfolgenden Beschreibung sowie der Zeichnung. Hierbei können gemäß der Erfindung, die in den Unteransprüchen angegebenen Merkmale jeweils für sich, aber auch in Kombination, die erfindungsgemäße Lösung gemäß Anspruch 1 weiter ausgestalten.

Der erfindungsgemäße Leitungsverschluss dient zum Verschließen einer Fluidleitung, wobei im Sinne der Erfindung unter einer Fluidleitung auch ein Behälter zur Speicherung eines Fluids zu verstehen ist, bei dem eine Behälteröffnung mit dem erfindungsgemäßen Leitungsverschluss verschlossenen werden kann. Hierzu weist der Leitungsverschluss einen Verschlusskörper auf, der an einem Leitungsende befestigbar ist. Bei dem Verschlusskörper kann es sich um einen in das Leitungsende einführbaren Körper oder um einen solchen Körper handeln, der außen an dem Leitungsende angeordnet werden kann. Gemäß der Erfindung ist ein Sicherungskörper vorgesehen, der eine in das Leitungsinnere führende Öffnung in dem Verschlusskörper oder in der Leitung verschließt. Der Sicherungskörper ist derart ausgebildet und im Bezug auf den Verschlusskörper angeordnet, dass er die Öffnung freigibt bevor der Verschlusskörper von der Leitung entfernt werden kann.

Diese Ausgestaltung des erfindungsgemäßen Leitungsverschlusses zwingt eine den Leitungsverschluss von der Leitungsverschluss lösende Person, vor dem Entfernen des Verschlusskörpers von dem Leitungsende festzustellen, ob sich in der Leitung noch ein Fluid befindet, da dieses, wenn vorhanden, über die entweder an dem Verschlusskörper oder an der Leitung ausgebildete Öffnung vor dem Entfernen des Verschlusskörpers ausströmen würde. Hierzu ist der die Öffnung fluiddicht verschließende Sicherungskörper, ohne dass der Verschlusskörper von dem Leitungsende entfernen werden kann, in eine die Öffnung freigebende Stellung bewegbar. So ist beispielsweise eine Ausgestaltung denkbar, bei der der Sicherungskörper direkt oder indirekt über eine Kopplung mit einem weiteren Bauteil den Verschlusskörper in einer das Leitungsende verschließenden Stellung blockiert und diese Blockierung des Verschlusskörpers erst durch eine die Öffnung freigebende Bewegung des Sicherungskörpers relativ zu dem Verschlusskörper und/oder der Leitung z.B. durch das Entfernen des Sicherungskörpers auflöst. Erfindungsgemäß ist in diesem Zusammenhang auch eine solche Ausgestaltung möglich, bei der der Sicherungskörper fest mit dem Verschlusskörper verbunden ist oder einen Teil des Verschlusskörpers bildet. So kann zum Beispiel ein an dem Außenumfang des Leitungsendes befestigbarer kappenförmiger Verschlusskörper vorgesehen sein, der, wenn er an dem Leitungsende befestigt ist, mit einem von dem Leitungsende beabstandeten Endabschnitt, der einen Sicherungskörper bildet, eine an der Leitung von dem Leitungsende korrespondierend beabstandete Öffnung verschließt. Bei dieser Ausgestaltung führt eine Bewegung zum Entfernen des Verschlusskörpers von dem Leitungsende dazu, dass zunächst die an der Leitung ausgebildete Öffnung freigegeben wird, wobei durch Wahl geeigneter Befestigungsmittel beispielsweise durch eine Befestigung mittels Gewinde, also als Schraubkappe, sicherzustellen ist, dass der Verschlusskörper zwar relativ zu der Leitung bewegbar ist, hierbei aber erst nach dem Freigeben der Öffnung von dem Leitungsende lösbar ist.

Der erfindungsgemäße Leitungsverschluss erweist sich besonders geeignet zum Verschließen von Druckleitungen oder Druckbehältern, also von Leitungen bzw. Behältern, die mit einem unter Druck stehenden Fluid gefüllt sind. Hier erkennt eine den Verschlusskörper von dem Leitungsende entfernen wollende Person durch das über die Öffnung ausströmende Fluid, dass sich in der Leitung noch ein unter Druck stehendes Fluid befindet, bevor sich der Verschlusskörper eigenständig durch den in der Leitung herrschenden Druck von dem Leitungsende lösen kann. Vor dem endgültigen Entfernen des Verschlusskörpers ist es so möglich, das Druckniveau in der Leitung in ausreichendem Maße zu senken beispielsweise durch das Ausströmen des Fluids über die Öffnung oder geeignete Vorkehrungen beim Entfernen zu treffen. Insofern ist die Bedienung des erfindungsgemäßen Leitungsverschlusses deutlich sicherer als bei bislang bekannten Verschlüssen dieser Art.

Bevorzugt ist der Sicherungskörper an dem Verschlusskörper und/oder an der Leitung lösbar befestigt. In diesem Zusammenhang können der Sicherungskörper und dessen Befestigung so ausgebildet sein, dass die von dem Sicherungskörper verschlossene Öffnung allein durch ein teilweises Lösen der Befestigung durch Druckbeaufschlagung eines in der Leitung befindlichen Fluids in eine die Öffnung freigebende Stellung bewegt wird. Hierbei kann die Befestigung des Sicherungskörpers an dem Verschlusskörper bzw. Rohr vorzugsweise in einem die Öffnung umgebenen Randbereich und bevorzugt mittels Schraubenverbindungen erfolgen.

Zum Befestigen des Verschlusskörpers in oder an der Leitung kann eine Befestigungsvorrichtung vorgesehen sein, die vorteilhaft mit einer entfernbar angeordneten Befestigungssicherung gegen ein Lösen der Befestigung gesichert ist. Das heißt, für das zum Entfernen des Verschlusskörpers von dem Leitungsende erforderliche Lösen der Befestigungsvorrichtung, mit der der Verschlusskörper an dem Leitungsende befestigt ist, ist es bei dieser Ausgestaltung erforderlich, zunächst eine Befestigungssicherung zu entfernen, die ansonsten das Lösen der Befestigungsvorrichtung verhindert. Um sicherzustellen, dass der die an dem Verschlusskörper oder an dem Rohr ausgebildete Öffnung verschließende Sicherungskörper vor dem Entfernen des Verschlusskörpers in eine die Öffnung freigebende Stellung und damit in eine ein Vorhandensein von Fluid in der Leitung anzeigende Stellung bewegt wird, kann die Befestigungssicherung zweckmäßigerweise mit dem Sicherungskörper verbunden sein. Bevorzugt ist demnach eine Ausgestaltung, bei der die Befestigungssicherung aufgrund ihrer Verbindung mit dem Sicherungskörper nur dann von der Befestigungsvorrichtung entfernt werden kann, wenn der Sicherungskörper in eine die Öffnung freigebende Stellung bewegt wird bzw. von dem Verschlusskörper und/oder dem Rohr gelöst wird.

Alternativ ist eine Ausgestaltung denkbar, bei der der Sicherungskörper ein Bestandteil der Befestigungsvorrichtung zum Befestigen des Verschlusskörpers in oder an der Leitung ist. Hierbei kann der Sicherungskörper zum Freigeben der an dem Verschlusskörper oder der Leitung ausgebildeten Öffnung derart bewegbar, beispielsweise drehbar an der Befestigungseinrichtung angeordnet sein, dass durch die Bewegung des Sicherungskörpers eine mit dem Sicherungskörper gekoppelte Befestigungssicherung so manipuliert wird, dass das Entfernen des Verschlusskörpers möglich ist.

Der Sicherungskörper und die Befestigungssicherung können zwei starr miteinander verbundene separate Bauteile sein. Bevorzugt ist allerdings vorgesehen, dass der Sicherungskörper und die Befestigungssicherung ein gemeinsames Bauteil bilden. Demzufolge ist ein Bauteil vorgesehen, dass einerseits als Sicherungskörper die in dem Verschlusskörper oder in dem Rohr ausgebildete Öffnung fluiddicht verschließt und andererseits vor dem Freigeben der Öffnung eine Befestigungsvorrichtung zum Befestigen des Verschlusskörpers an dem Leitungsende gegen ein Lösen der Befestigung sichert.

In einer bevorzugten Ausgestaltung des erfindungsgemäßen Leitungsverschlusses ist der Verschlusskörper zumindest teilweise in das Leitungsende einführbar. In diesem Fall weist der Versschlusskörper zumindest einen Teilabschnitt mit zweckmäßigerweise einem mit dem Leitungsquerschnitt am Leitungsende komplementären Außenquerschnitt auf. Vorteilhaft kann zum Befestigen des Verschlusskörpers in dem Leitungsende eine Schelle vorgesehen sein. Grundsätzlich ist unter eine Schelle im Sinne der Erfindung jedes um den Außenumfang der Leitung zu legendes Band zu verstehen, dass dort mit allen hierzu geeigneten Spannmitteln, beispielsweise mittels eines Spannschlosses festgezurrt werden kann. Vorzugsweise wird aber eine Schelle verwendet, die in Art handelsüblicher Schlauchschellen mittels mindestens einer Spannschraube auf der Leitung spannbar ist.

Vorteilhaft ist ein Abschnitt des den Sicherheitskörper bildenden Bauteils derart an der Schelle festlegbar, dass er einen Zugang zu dem am Kopf der Spannschraube ausgebildeten Formschlusselement versperrt. Dieser Abschnitt des Bauteils, der zweckmäßigerweise von dem die Öffnung an dem Verschlusskörper verschließenden Abschnitt beabstandet ist, bildet insofern eine Befestigungssicherung für die Schelle, da die Spannschraube aufgrund der Anordnung des die Befestigungssicherung bildenden Abschnitts nicht mit einem entsprechend ausgebildeten Werkzeug gelöst werden kann. Dies ist erst dann möglich, wenn der Sicherungskörper nach dem Lösen dessen Befestigung an dem Verschlusskörper von der Schelle entfernt wird, so dass das an dem Kopf der Spannschraube ausgebildete Formschlusselement zugänglich wird.

In vorteilhafter Weiterbildung kann die Schelle an der Leitung formschlüssig festlegbar sein. Hierzu kann an der Schelle mindestens ein Vorsprung ausgebildet sein, der in eine an der Außenumfangsseite der Leitung ausgebildete Ausnehmung eingreift. Umgekehrt kann typischerweise auch an der Außenumfangsseite der Leitung ein nach außen ragender Vorsprung angeordnet sein, der in eine an der Schelle ausgebildete Ausnehmung oder Durchbrechung eingreift. Bevorzugt ist an der Leitung eine sich über den gesamten Leitungsumfang erstreckende Nut ausgebildet, wobei ein Außenrandbereich der Schelle zum Eingriff in die Nut nach innen abgewinkelt ausgebildet ist. Besonders vorteilhaft erlaubt es die formschlüssige Festlegung der Schelle an der Leitung, auch den Verschlusskörper an dem Leitungsende formschlüssig festzulegen, so dass es auch möglich ist, den Verschlusskörper mittels der Schelle an starren Rohrleitungsenden zu befestigen.

Hierbei kann die Schelle das Leitungsende und den daran befestigten Verschlusskörper vorteilhafterweise zumindest teilweise umgreifen. Dementsprechend kann die Schelle an einem umfänglichen Randbereich mindestens einen in das Innere der Schelle gerichteten Vorsprung aufweisen, der sich direkt außenseitig des Leitungsendes radial in Richtung einer Mittelachse der Leitung erstreckt, und so den in der Leitung befindlichen Verschlusskörper gegen eine Bewegung aus dem Leitungsende heraus sichern. Bevorzugt ist vorgesehen, dass ein umfänglicher Randabschnitt der Schelle in das Innere der Schelle weisend abgewinkelt ist und das Leitungsende und den Verschlusskörper quer zur Längsausdehnung von Leitung und Verschlusskörper umgreift.

Insbesondere dann, wenn ein Bauteil gleichzeitig den Sicherungskörper zum Verschließen der an dem Verschlusskörper ausgebildeten Öffnung und die Befestigungssicherung für die Schelle bildet, erweist es sich als zweckmäßig, wenn die Schelle in einer definierten Position an der Leitung fixierbar ist. In diesem Fall erfolgt die Fixierung der Schelle typischerweise derart, dass der Sicherungskörper einerseits die Öffnung an dem Verschlusskörper verschließen kann und andererseits die Befestigung der Schelle auf der Leitung sichern kann, indem die Befestigungssicherung an der entsprechenden Stelle an der Schelle angeordnet ist. Zur Fixierung der Schelle an der Leitung kann an dem Spannband der Schelle vorteilhaft eine Durchbrechung ausgebildet sein, in die ein an der Mantelfläche der Leitung ausgebildeter Vorsprung eingreift.

Bevorzugt ist ein Winkelelement vorgesehen, bei dem ein erster Schenkel eine Abdeckung für die an dem Verschlusskörper ausgebildete Öffnung bildet und ein zu dem ersten Schenkel normal ausgerichteter zweiter Schenkel eine Befestigungssicherung bildet. Demzufolge kann der Sicherungskörper in einfacher und kostengünstiger Weise aus einem Blech hergestellt sein, bei dem zumindest zwei Blechabschnitte so zueinander abgewinkelt werden, dass in Einbaulage des Winkelelements ein erster Blechabschnitt die an dem Verschlusskörper ausgebildete Öffnung abdeckt und ein zweiter Bleckabschnitt die Befestigung der Schelle beispielsweise durch Versperrung des Zugangs zu dem Kopf einer Spannschraube sichert.

Nachfolgend ist die Erfindung anhand eines in der Zeichnung dargestellten Ausführungsbeispiels näher erläutert. In der Zeichnung zeigt:

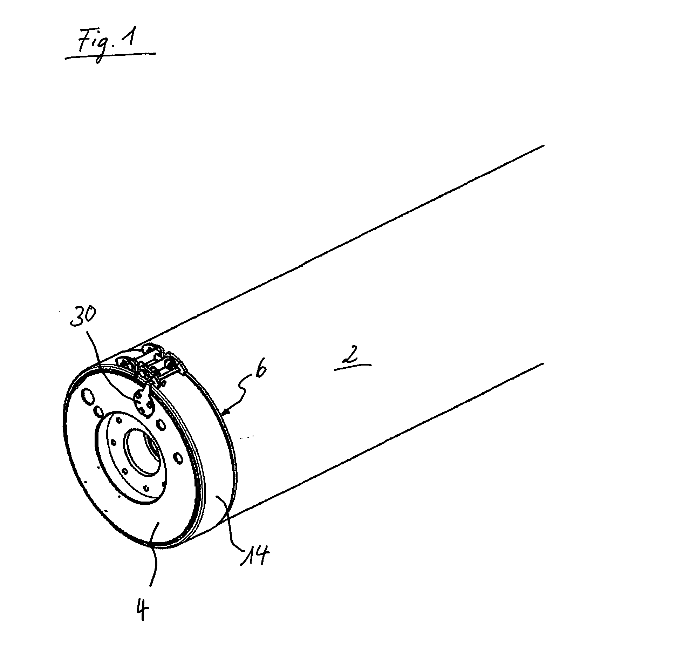

- Fig. 1: schematisch vereinfacht einen Endabschnitt einer Leitung mit einem an dem Leitungsende angeordneten Leitungsverschluss in perspektivischer Darstellung,

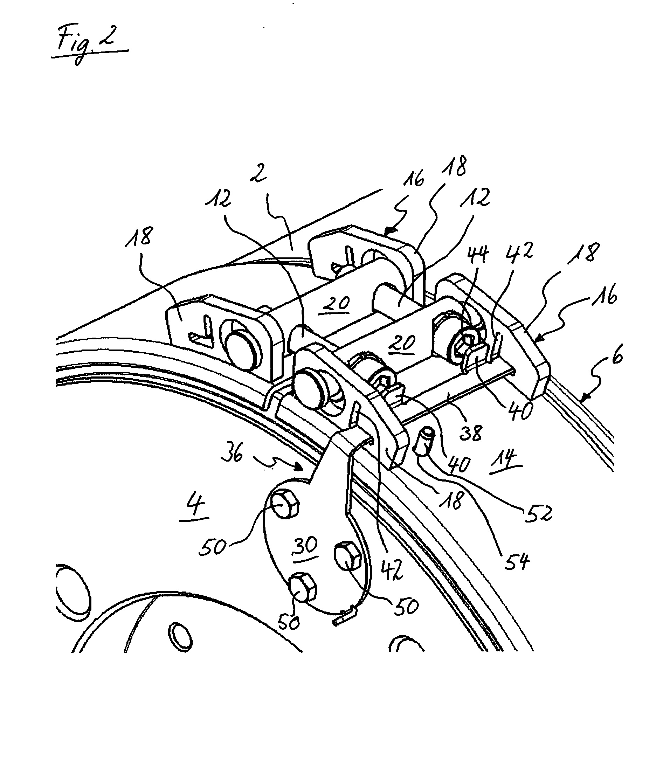

- Fig. 2: perspektivisch einen vergrößert dargestellten Teilausschnitt des Leitungsverschlusses nach Fig. 1,

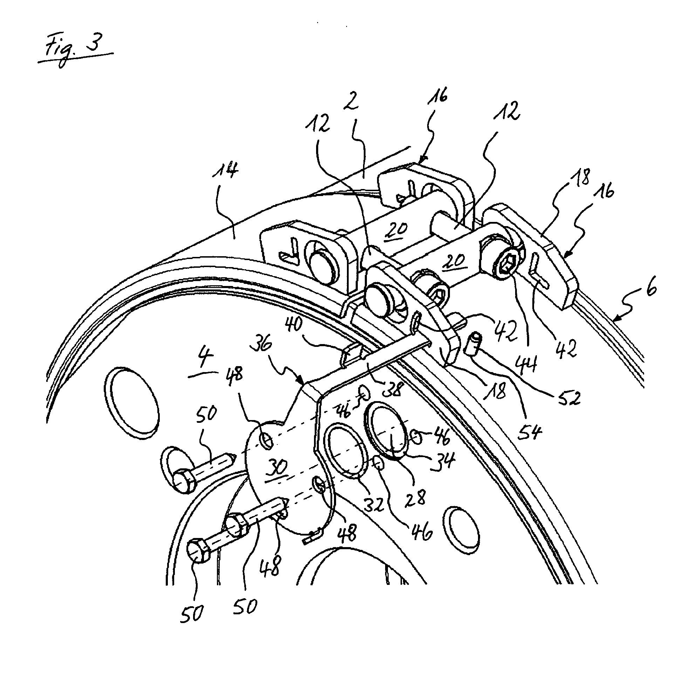

- Fig. 3: die Darstellung nach Fig. 2 mit der Befestigung eines Sicherungskörpers in Explosionsdarstellung,
- Fig. 4: das Leitungsende mit dem Leitungsverschluss nach Fig. 1 in einer stirnseitigen Ansicht und
- Fig. 5: vergrößert eine Einzelheit V-V aus Fig. 4.

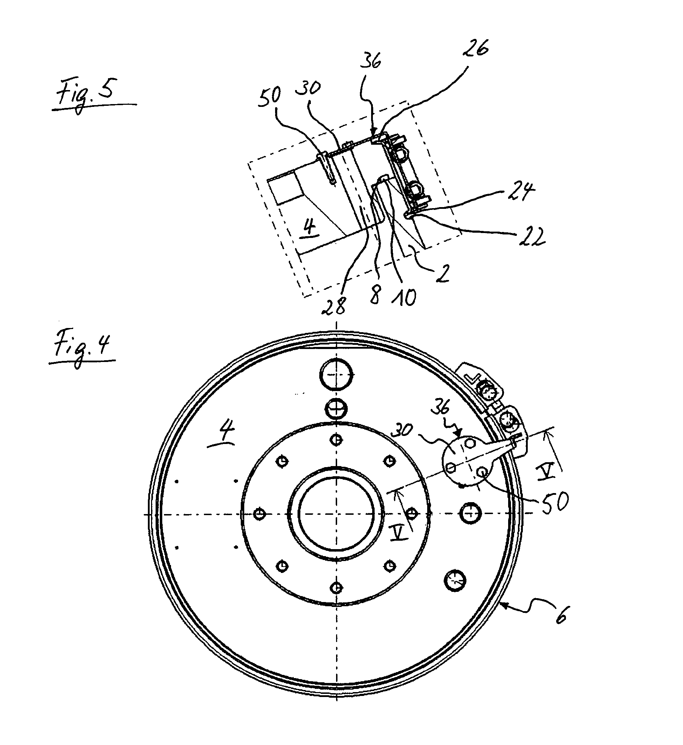

Eine Leitung 2 zum Leiten eines Fluids, die von einem Rohr 2 gebildet wird, ist mittels eines Leitungsverschlusses verschlossen. Der Leitungsverschluss weist einen Verschlusskörper 4 auf, der mittels einer Schelle 6 an einem Leitungsende der Leitung 2 befestigt ist. Wie aus Fig. 5 deutlich wird, verjüngt sich der Verschlusskörper 4 in Längsrichtung absatzförmig von einem ersten Abschnitt, in dem der Außenquerschnitt des Verschlusskörpers 4 mit dem Außenquerschnitt der Leitung 2 korrespondiert zu einem zweiten Abschnitt, in dem der Außenquerschnitt des Verschlusskörpers 4 mit dem Öffnungsquerschnitt der Leitung 2 korrespondiert. Dieser zweite Abschnitt des Verschlusskörpers 4 ist zum Eingriff in das Leitungsende der Leitung 2 vorgesehen, während der erste Abschnitt des Verschlusskörpers 4 zur Anlage an der das Leitungsende bildenden Stirnseite der Leitung 2 dient. An einer einen Teil des Absatzes von dem ersten zu dem zweiten Verschlusskörperabschnitt bildenden radial nach außen gerichteten Flachseite des ersten Abschnitts des Verschlusskörpers 4 ist eine Ringnut 8 ausgebildet, die sich um den Umfang der ringförmig ausgebildeten Flachseite erstreckt. Die Ringnut 8 dient zur Aufnahme eines Dichtrings 10, mit dem der Verschlusskörper 4 gegenüber der Leitung 2 fluiddicht abgedichtet wird.

Die Befestigung der Schelle 6 auf der Mantelfläche der Leitung 2 und auf dem aus dem Ende der Leitung 2 ragenden Abschnitt des Verschlusskörpers 4 erfolgt mittels zweier Spannschrauben 12. Hierzu ist an jedem der beiden Enden eines Spannbandes 14 der Schelle 6 ein Bügel 16 angeordnet, der von zwei an den Außenrändern des Spannbandes 14 angeordneten Bauteilen 18, die mit einem Zapfen 20 verbunden sind, gebildet wird. Hierbei sind die Zapfen 20 in an den beiden an einem Ende des Spannbandes 14 einander gegenüberliegend angeordneten Bauteilen 18 in dort ausgebildeten Langlöchern lose gelagert. Zum Verspannen des Spannbandes 14 sind die beiden Zapfen 20 der Bügel 16 mittels der Spannschrauben 12 miteinander verschraubbar.

Die Schelle 6 ist formschlüssig an der Leitung 2 festgelegt. Zu diesem Zweck ist in einem an das Leitungsende anschließenden Bereich der Leitung 2 eine Nut 22 ausgebildet, die sich über den gesamten Außenumfang der Leitung 2 erstreckt (siehe Fig. 5). In diese Nut 22 greift ein Randabschnitt 24 des Spannbandes 14 der Schelle 6 ein, der in Richtung des Inneren der Schelle 6 abgewinkelt ist. Um den Spannverschluss der Schelle 6 in einer definierten Position bezogen auf den Außenumfang der Leitung 2 anordnen zu können, ist an der Leitung 2 ein radial nach außen ragender Vorsprung 23 und an dem Spannband 14 der Schelle 6 eine Durchbrechung 25 ausgebildet, wobei der Vorsprung 23 die Durchbrechung 25 durchgreift.

Ein dem Randabschnitt 24 gegenüberliegender Randabschnitt 26 des Spannbandes 14 ist ebenfalls im Wesentlichen in Richtung des Schelleninneren abgewinkelt. Dieser Randabschnitt 26 umgreift den Verschlusskörper 4 an einem von der Leitung 2 abgewandten Endbereich und legt den Verschlusskörper 4 auf diese Weise formschlüssig an der Leitung 2 fest.

An dem Verschlusskörper 4 ist stirnseitig eine Öffnung 28 ausgebildet, die einen Zugang von dem Inneren der Leitung 2 nach außerhalb des Verschlusskörpers 4 schafft. Die Öffnung 28 wird von einem Sicherungskörper 30 verschlossen, wobei zur fluiddichten Abdichtung zwischen dem Verschlusskörper 4 und dem Sicherungskörper 30 ein Dichtring 32 vorgesehen ist. Dieser Dichtring 32 ist auf einem an dem äußeren Öffnungsrand der Öffnung 30 ausgebildeten Absatz 34 angeordnet.

Der Sicherungskörper 30 ist Teil eines Bauteils 36, das auch eine Befestigungssicherung für die Schelle 6 bildet. Hierzu ist das Bauteil 36 als ein Winkelelement 36 ausgebildet, das einen ersten Schenkel aufweist, bei dem eine kreisförmige Erweiterung den Sicherungskörper 30 bildet und ein zu dem ersten Schenkel im Wesentlichen normal ausgerichteter länglicher zweiter Schenkel 38 die Befestigungssicherung für die Schelle 6 bildet. An dem Schenkel 38 sind zwei von einander beabstandete Vorsprünge 40 ausgebildet, die zu dem Grundkörper des Schenkels 38 normal ausgerichtet sind.

Der Schenkel 38 ist an einem Bügel 16 des Spannverschlusses der Schelle 6 formschlüssig festgelegt. Hierzu weisen die beiden Teil des Bügels 16 bildenden Bauteile 18 jeweils eine L-förmige Durchbrechung 42 auf, durch die der Schenkel 38 geführt ist. In Einbaulage des Bauteils 36 sind die an dem Schenkel 38 ausgebildeten Vorsprünge 40 derart vor den Köpfen der Spannschrauben 12 angeordnet, dass sie den Zugang zu den an den Köpfen ausgebildeten Formschlusselementen 44 versperren.

Das Bauteil 36 ist an dem Verschlusskörper 4 befestigt. Hierzu sind an dem den Sicherungskörper 30 bildenden Abschnitt des Bauteils 36 korrespondierend zu drei an dem Verschlusskörper 4 im Randbereich der Öffnung 28 ausgebildeten Gewindesacklöchern 46 drei Durchbrechungen 48 vorgesehen, die zur Aufnahme von Schrauben 50 dienen, die in den Gewindesacklöchern 46 verschraubt werden. Zwar ist die Befestigung mittels dreier Schrauben 50 bevorzugt, es sei aber darauf hingewiesen, dass das Bauteil 36 auch mit mehr als drei Schrauben 50 an dem Verschlusskörper 4 befestigt sein kann.

Um den Schenkel 38 des Bauteils 36 an dem Bügel des Spannverschlusses der Schelle 6 formschlüssig festlegen zu können, ist es erforderlich, die Schelle 6 an einer hierfür geeigneten Stelle an der Leitung 2 zu positionieren. Um eine solche Positionierung der Schelle 6 sicherzustellen, ist an dem Außenumfang der Leitung 2 ein radial nach außen ragender Positionierstift 52 angeordnet, der zum Eingriff in eine an dem Spannband 14 der Schelle 6 korrespondierend ausgebildete Durchbrechung 54 vorgesehen ist.

Die Funktionsweise des in der Zeichnung dargestellten Leitungsverschlusses ist wie folgt.

Zum Entfernen des Verschlusskörpers 4 von der Leitung 2, d.h. zum Öffnen des Leitungsverschlusses ist es erforderlich, die Schelle 6 zu lösen. Dies ist zunächst nicht möglich, da die Vorsprünge 40 an dem Schenkel 38 des Bauteils 36 einen Zugang zu den an den Köpfen der Spannschrauben 12 ausgebildeten Formschlusselementen 44 versperren. Dementsprechend muss das Bauteil 36 zum Lösen der Spannschrauben 12 erst entfernt werden.

Hierzu müssen die Schrauben 50, die das Bauteil 36 an dem Verschlusskörper 4 halten, gelöst werden. Bereits nach dem Lösen einer ersten der Schrauben 50 kann ein eventuell in der Leitung 2 befindliches unter Druck stehendes Fluid über einen sich aufgrund des Fluiddrucks zwischen dem den Sicherungskörper 30 und dem Verschlusskörper 4 bildenden Spalt ausströmen. Hierdurch kommt es zu einer Senkung des in der Leitung 23 herrschenden Fluiddrucks oder zu einem nachhaltigen Fluidstrom, der der Bedienperson signalisiert, dass die Leitung unter Druck steht. Bei Erreichen eines ausreichend geringen Druckniveaus in der Leitung 2 kann das Bauteil 36 entfernt werden, wobei der Schenkel 38 aus den an den Bauteilen 18 der Bügel 16 ausgebildeten Durchbrechungen 42 herausgezogen wird. Anschließend sind die an den Köpfen der Spannschrauben 12 ausgebildeten Formschlusselemente 44 frei zugänglich, so dass die Spannschrauben 12 und damit einhergehend die Schelle 6 von der Leitung 2 und dem Verschlusskörper 4 gelöst werden kann. Nun ist es gefahrlos möglich, den Verschlusskörper 4 von dem Leitungsende der Leitung 2 zu entfernen.

### Bezugszeichenliste

- 2: - Leitung, Rohr
- 4: - Verschlusskörper
- 6: - Schelle
- 8: - Ringnut
- 10: - Dichtring
- 12: - Spannschraube
- 14: - Spannband
- 16: - Bügel
- 18: - Bauteil
- 20: - Zapfen
- 22: - Nut
- 23: - Vorsprung
- 24: - Randabschnitt
- 25: - Durchbrechung
- 26: - Randabschnitt
- 28: - Öffnung
- 30: - Sicherungskörper
- 32: - Dichtring
- 34: - Absatz
- 36: - Bauteil, Winkelelement
- 38: - Schenkel
- 40: - Vorsprung
- 42: - Durchbrechung
- 44: - Formschlusselement
- 46: - Gewindesackloch
- 48: - Durchbrechung
- 50: - Schraube
- 52: - Positionierstift
- 54: - Durchbrechung

## Patentansprüche

1. Leitungsverschluss mit einem an einem Leitungsende befestigbaren Verschlusskörper (4), **dadurch gekennzeichnet, dass** der Leitungsverschluss einen Sicherungskörper (30) aufweist, der eine in das Leitungsinnere führende Öffnung (28) an dem Verschlusskörper (4) oder an der Leitung (2) verschließt und derart ausgebildet und in Bezug auf den Verschlusskörper (4) angeordnet ist, dass der Sicherungskörper die Öffnung (28) freigibt bevor der Verschlusskörper (4) von der Leitung (2) entfernt werden kann.

2. Leitungsverschluss nach Anspruch 1, **dadurch gekennzeichnet, dass** der Sicherungskörper (30) an dem Verschlusskörper (4) und/oder der Leitung (2) lösbar befestigt ist.

3. Leitungsverschluss nach einem der vorangehenden Ansprüche, **dadurch gekennzeichnet, dass** eine Befestigungsvorrichtung zum Befestigen des Verschlusskörpers (4) in oder an der Leitung (2) mit einer entfernbar angeordneten Befestigungssicherung gegen ein Lösen der Befestigung gesichert ist.

4. Leitungsverschluss nach Anspruch 3, **dadurch gekennzeichnet, dass** die Befestigungssicherung mit dem Sicherungskörper (30) verbunden ist.

5. Leitungsverschluss nach einem der Ansprüche 3 oder 4, **dadurch gekennzeichnet, dass** der Sicherungskörper (30) und die Befestigungssicherung ein gemeinsames Bauteil (36) bilden.

6. Leitungsverschluss nach einem der vorangehenden Ansprüche, **dadurch gekennzeichnet, dass** der Verschlusskörper (4) zumindest teilweise in das Leitungsende einführbar ist und zur Befestigung des Verschlusskörpers (4) eine Schelle (6) vorgesehen ist, welche mittels zumindest einer Spannschraube (12) zumindest auf die Leitung (2) spannbar ist.

7. Leitungsverschluss nach Anspruch 6, **dadurch gekennzeichnet, dass** ein Abschnitt eines den Sicherungskörper (30) bildenden Bauteils (36) derart an der Schelle (6) festlegbar ist, dass er einen Zugang zu dem am Kopf der Spannschraube (12) ausgebildeten Formschlusselement (44) versperrt.

8. Leitungsverschluss nach einem der Ansprüche 6 oder 7, **dadurch gekennzeichnet, dass** die Schelle (6) an der Leitung (2) formschlüssig festlegbar ist.

9. Leitungsverschluss nach einem der Ansprüche 6 bis 8, **dadurch gekennzeichnet, dass** die Schelle (6) das Leitungsende und den daran befestigten Verschlusskörper (4) zumindest teilweise umgreift.

10. Leitungsverschluss nach einem der Ansprüche 6 bis 9, **dadurch gekennzeichnet, dass** die Schelle (6) in einer definierten Position an der Leitung (2) fixierbar ist.

11. Leitungsverschluss nach einem der vorangehenden Ansprüche, **dadurch gekennzeichnet, dass** ein Winkelelement (36) vorgesehen ist, bei dem ein erster Schenkel einen Sicherungskörper (30) zur Abdeckung für die an dem Verschlusskörper (4) ausgebildete Öffnung (28) bildet und ein zu dem ersten Schenkel normal ausgerichteter zweiter Schenkel (38) eine Befestigungssicherung bildet.
